Europäisches Patentamt

European Patent Office

Office européen des brevets

(11) Numéro de publication: **0 362 674**

**A1**

## (12) DEMANDE DE BREVET EUROPEEN

(21) Numéro de dépôt: **89117762.8**

(22) Date de dépôt: **26.09.89**

(51) Int. Cl.5: **B29C 53/62 , F16F 1/18**

(30) Priorité: **04.10.88 FR 8812963**

(43) Date de publication de la demande:
**11.04.90 Bulletin 90/15**

(84) Etats contractants désignés:
**AT BE CH DE ES FR GB IT LI LU NL**

(71) Demandeur: **GEC ALSTHOM SA**
**38, avenue Kléber**
**F-75116 Paris(FR)**

(72) Inventeur: **Camusso, André**
**4, Place Bénédict Teissier**
**F-69005 Lyon(FR)**
Inventeur: **Le Courtois, Thierry**
**11, Avenue Roberto Rossellini**
**F-69100 Villeurbanne(FR)**

(74) Mandataire: **Weinmiller, Jürgen et al**
**Lennéstrasse 9 Postfach 24**
**D-8133 Feldafing(DE)**

(54) **Procédé de fabrication d'une lame de ressort en fibres imprégnées de résine par enroulement filamentaire.**

(57) Procédé de fabrication d'une lame de ressort en fibres, notamment de verre, de carbone ou de polyamide aromatique, imprégnées de résine. On enroule sur un mandrin en rotation une mèche de fibres imprégnées de résine durcissable à partir d'un guide-fils en translation relative par rapport au mandrin, puis soumet le matériau obtenu au durcissement de la résine.

EP 0 362 674 A1

## Procédé de fabrication d'une lame de ressort en fibres imprégnées de résine par enroulement filamentaire.

La présente invention concerne un procédé de fabrication d'une lame de ressort en fibres imprégnées de résine, dans lequel on enroule sur un mandrin en rotation une mèche de fibres imprégnées de résine durcissable, puis soumet le matériau obtenu au durcissement de la résine.

On fabrique actuellement de telles lames de ressort en disposant dans un moule des fibres sèches, telles que des fibres de verre, de carbone ou de polyamide aromatique, et en injectant dans ce moule une résine liquide durcissable, telle qu'une résine époxyde, soit à froid, soit à chaud.

Ce procédé ne permet cependant d'obtenir des ressorts en matériau composite fibres-résine qu'avec un taux de fibres moyen, compris entre 50 et 60 % en poids. Or les propriétés mécaniques du matériau composite sont d'autant meilleures que le taux de fibres est plus élevé, et les ressorts présentant ces taux de fibres ne jouissent que de propriétés mécaniques moyennes, insuffisantes pour certaines applications.

Le document EP-A- 0005916 décrit la fabrication d'un ressort à lame par enroulement filamentaire longitudinal de rubans de fibres, préimprégnées ou imprégnées juste avant leur enroulement, sur un mandrin. Les deux couches de fibres enroulées longitudinalement sont séparées par une couche intermédiaire de fibres d'orientation désordonnée. L'ensemble est alors soumis à un durcissement par chauffage et mise sous pression dans un moule. De tels ressorts ne présentent cependant pas des propriétés mécaniques suffisantes pour certaines applications.

La présente invention a pour but de procurer des lames de ressort présentant des taux de fibres élevés, de 70 % à 80 % en poids, et de meilleures propriétés mécaniques.

Le procédé de fabrication selon l'invention est caractérisé en ce que l'on effectue l'enroulement de la mèche de fibres imprégnée de résine durcissable à partir d'un guide-fils en translation relative par rapport au mandrin. Ce procédé, déjà utilisé dans d'autres applications, telles que la fabrication de récipients cylindriques, est appelé couramment procédé d'enroulement filamentaire.

Il répond en outre de préférence à au moins l'une des caractéristiques suivantes :
- On intercale entre deux couches de fibres imprégnées de résine durcissable une couche d'un matériau viscoélastique.
- Après l'enroulement de la mèche sur le mandrin en une première couche, on frette le produit obtenu à l'aide d'un ruban de matériau synthétique, avant d'effectuer le durcissement de la résine d'imprégnation, et après ce durcissement on usine la surface du produit, dépose la couche de matériau viscoélastique, puis enroule une deuxième couche de fibres imprégnées de résine durcissable et effectue un nouveau frettage par un ruban de matériau synthétique, puis le durcissement de la résine d'imprégnation des fibres de la deuxième couche.
- Après l'enroulement de la mèche de fibres imprégnées de résine sur le mandrin en une première couche, on dépose sur celle-ci un tissu de délaminage, on effectue un frettage à l'aide d'une mèche de fibres de polyamide aromatique non imprégnées de résine, avant d'effectuer le durcissement de la résine, on retire alors le tissu de délaminage et la couche de fibres de polyamide aromatique, on dépose la couche de matériau viscoélastique, on dépose sur celui-ci une deuxième couche de fibres imprégnées de résine par enroulement d'une mèche de ces fibres, on effectue un frettage à l'aide d'un ruban de matériau synthétique, puis le durcissement de la résine de la deuxième couche.
- Les fibres sont des fibres de verre, de carbone ou de polyamide aromatique.
- On utilise des fibres préimprégnées de résine durcissable.
- On utilise des fibres non préimprégnées de résine durcissable, que l'on imprègne par passage au travers d'un bain de résine liquide immédiatement avant leur enroulement.

Le procédé de l'invention permet de déposer la mèche de fibres imprégnées de résine sous tension, et donc d'obtenir un ressort en matériau composite précontraint avec un taux de fibres élevé, de 70 % à 80 % en poids, lui conférant d'excellentes propriétés mécaniques. Il permet en outre de faire varier l'angle de dépose de la fibre renforçante, et donc de la déposer dans la direction la plus favorable par rapport à la sollicitation extérieure à laquelle sera soumis le ressort. On peut par ailleurs incorporer dans le matériau composite au cours de bobinage des couches (tissus, fibre) de matériau amortissant, tel qu'un élastomère vulcanisable.

Il est décrit ci-après, à titre d'exemples, deux variantes du procédé de fabrication par enroulement filamentaire selon l'invention de ressorts comportant une couche de matériau viscoélastique.

Selon la première variante du procédé, on fait appel à une dépose intermédiaire d'un ruban de matière cellulosique qui maintient la couche de résine en surface. On doit alors effectuer un usinage avant la dépose du film de matériau viscoélastique. A cet effet, on effectue un enroulement filamentaire d'une mèche de fibres préimprégnées de résine époxyde, à l'aide d'un guide-fils en translation par rapport à un mandrin en rotation, jusqu'à une fraction de l'épaisseur finale désirée, par exemple la moitiée de l'épaisseur finale. On frette cette couche par enroulement sous tension autour de la couche de fibres d'un ruban de la matière cellulosicée commercialisée sous la marque "Cellophane ". On laisse la résine époxyde subir un premier durcissement (gélification) tout en maintenant le tambour en rotation. On usine alors à l'aide d'un outil la couche de film de type "Cellophane" et une partie de celle de fibres imprégnées de façon à amener l'ensemble de la couche de fibres imprégnées à une épaisseur bien constante. On dépose alors par enroulement un film de matériau viscoélastique, par exemple d'un élastomère. On dépose à nouveau une couche de fibres préimprégnées de résine par enroulement filamentaire d'une mèche de ces fibres autour du mandron en rotation à l'aide d'un guide-fils en translation le long de ce mandrin. On effectue un nouveau frettage par un ruban de "Cellophane", puis laisse s'opérer le durcissement (ou gélification) de la résine de la deuxième couche. On assure un durcissement final de la résine d'imprégnation des deux couches de fibres par chauffage. On extrait alors le mandrin du produit obtenu et usine celui-ci aux cotes finales désirées.

On choisira les fibres que l'on imprègne de résine en fonction des propriétés physiques ou mécaniques finales désirées. Ce peuvent être notamment des fibres de verre, de carbone ou de polyamide aromatique, notamment de celle commercialisée sous la marque "Kevlar" par la société Dupont de Nemours.

Selon la seconde variante du procédé, on imprègne une mèche de fibres nues par passage dans un bain de résine époxyde liquide en amont d'un mandrin d'enroulement filamentaire. On enroule cette mèche autour du mandrin en rotation à l'aide d'un guide-fils en translation parallèlement à l'axe du mandrin, jusqu'à obtenir une épaisseur constituant une fraction de l'épaisseur finale désirée, par exemple la moitié de cette dernière. On enroule autour de la couche de fibres imprégnées de résine un tissu de délaminage, destiné à assurer l'élimination de l'excédent de résine après le bobinage de la mèche et le durcissement de la résine. On effectue alors un frettage de la couche obtenue par dépose sous tension d'une mèche de fibres de polyamide aromatique non imprégnées. On laisse la résine d'imprégnation subir la gélification, puis retire l'ensemble du tissu de délaminage et de la frette de fibres de polyamide aromatique. On dépose alors par enroulement un film de matière viscoélastique. On dépose à nouveau une couche de fibres imprégnées de résine époxyde par passage dans un bain de cette résine, par enroulement filamentaire autour du mandrin.

On effectue un nouveau frettage par enroulement d'un film de type "Cellophane", puis laisse s'opérer la gélification de la résine de la deuxième couche. On assure un durcissement final de la résine d'imprégnation des deux couches par chauffage. On retire le produit obtenu et l'amène aux cotes finales désirées par usinage.

Ces deux procédés permettent d'obtenir des lames de ressort de propriétés mécaniques très supérieures à celles des lames fabriqués par injection, du fait de leur teneur notablement plus élevées en fibres.

On comprend bien entendu que, si l'on désire fabriquer un ressort exempt de couche de matériau viscoélastique, on supprime alors l'opération de dépose de ce matériau, on n'effectue qu'une seule opération d'enroulement filamentaire d'une mèche de fibres imprégnées de résines, et supprime l'opération intermédiaire de frettage ou de dépose d'un tissu de délaminage.

**Revendications**

1/ Procédé de fabrication d'une lame de ressort en fibres imprégnées de résine, dans lequel on enroule sur un mandrin en rotation une mèche de fibres imprégnées de résine durcissable, puis soumet le matériau obtenu au durcissement de la résine, caractérisé en ce que l'on effectue l'enroulement de la mèche à partir d'un guide-fils en translation relative par rapport au mandrin.

2/ Procédé selon la revendication 1, caractérisé en ce que l'on intercale entre deux couches de fibres imprégnées de résine durcissable une couche d'un matériau visco-élastique.

3/ Procédé selon la revendication 2, caractérisé en ce qu'après l'enroulement de la mèche sur le mandrin en une première couche, on frette le produit obtenu à l'aide d'un ruban de matériau synthétique, avant d'effectuer le durcissement de la résine d'imprégnation, et en ce qu'après ce durcissement on usine la surface du produit, dépose la couche de matériau viscoélastique, puis enroule une deuxième couche de fibres imprégnées de résine durcissable et effectue un nouveau frettage par un ruban de matériau synthétique, puis le durcissement de la résine d'imprégnation des fibres de la deuxième couche.

4/ Procédé selon la revendication 2, caractérisé en ce qu'après l'enroulement de la mèche de fibres imprégnées de résine sur le mandrin en une première couche, on dépose sur celle-ci un tissu de délaminage, on effectue un frettage à l'aide d'une mèche de fibres de polyamide aromatique non imprégnées de résine, avant d'effectuer le durcissement de la résine, en ce que l'on retire alors le tissu de délaminage et la couche de fibres de polyamide aromatique, on dépose la couche de matériau viscoélastique, on dépose sur celui-ci une deuxième couche de fibres imprégnées de résine par enroulement d'une mèche de ces fibres, on effectue un frettage à l'aide d'un ruban de matériau synthétique, puis le durcissement de la résine de la deuxième couche.

5/ Procédé selon l'une des revendications 1 à 4, caractérisé en ce que les fibres sont des fibres de verre, de carbone ou de polyamide aromatique.

6/ Procédé selon l'une des revendications 1 à 5, caractérisé en ce que l'on utilise des fibres préimprégnées de résine durcissable.

7/ Procédé selon l'une des revendications 1 à 5, caractérisé en ce que l'on utilise des fibres non préimprégnées de résine durcissable, que l'on imprègne par passage au travers d'un bain de résine liquide immédiatement avant leur enroulement.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 005 916 (GKN)<br>* Résumé; page 5, lignes 4-25; figures 1,2 * | 1,2,5-7 | B 29 C 53/62<br>F 16 F 1/18 |
| A | | 3,4 | |
| X | EP-A-0 216 748 (BÖHLER)<br>* Résumé; figures 1-3 * | 1,5-7 | |
| X | US-A-3 142 598 (ROSEN)<br>* Figure 2; colonne 2, lignes 65,66 * | 1,5-7 | |
| A | PATENT ABSTRACTS OF JAPAN, vol. 13, no. 14 (M-784)[3362], 13 janvier 1989, page 55 M 784; & JP-A-63 225 738 (MAZDA MOTOR CORP.) 20-09-1988 | 1-4 | |
| A | FR-A-2 437 530 (BEKAERT)<br>* Page 2 * | 2-5 | |
| A | EP-A-0 084 101 (M.B.B.) | | |
| A | US-A-3 698 702 (BECK) | | DOMAINES TECHNIQUES RECHERCHES (Int. Cl.5) |
| A | EP-A-0 235 087 (ATOMIC) | | B 29 C<br>F 16 F |
| A | EP-A-0 110 254 (BASF) | | |

Le présent rapport a été établi pour toutes les revendications

| Lieu de la recherche | Date d'achèvement de la recherche | Examinateur |
|---|---|---|
| LA HAYE | 12-01-1990 | KUHN E.F.E. |

EPO FORM 1503 03.82 (P0402)